# EUROPÄISCHE PATENTSCHRIFT

(11) **EP 1 490 772 B1**
(45) Veröffentlichungstag und Bekanntmachung des Hinweises auf die Patenterteilung: **01.06.2005**
(21) Anmeldenummer: 03709820.9
(22) Anmeldetag: 29.03.2003
(51) Int. Cl.: G06F 12/06, G05B 19/042, G06F 13/40, H04L 12/403

(54) **VERFAHREN ZUM ADRESSIEREN DER TEILNEHMER EINES BUSSYSTEMS MITTELS IDENTIFIZIERUNGSSTRÖMEN**
METHOD FOR ADDRESSING THE USERS OF A BUS SYSTEM BY MEANS OF IDENTIFICATION FLOWS
PROCEDE D'ADRESSAGE DE DISPOSITIFS UTILISATEURS D'UN SYSTEME A BUS AU MOYEN DE COURANTS D'IDENTIFICATION

(30) Priorität: 02.05.2002 DE 10219716
(43) Veröffentlichungstag der Anmeldung: 29.12.2004
(73) Patentinhaber: ELMOS Semiconductor AG, 44227 Dortmund (DE)
(72) Erfinder: STEGER, Roland, 71093 Weil im Schönbuch (DE)
(74) Vertreter: Hilleringmann, Jochen
(86) Internationale Anmeldenummer: PCT/EP2003/003302
(87) Internationale Veröffentlichungsnummer: WO 2003/094001

(56) Entgegenhaltungen:
- EP-A- 0 489 346
- EP-A- 0 980 165
- WO-A-00/04428

## Beschreibung

Die Erfindung betrifft ein Verfahren zum Adressieren der Teilnehmer eines Bussystems mit einer Steuereinheit, einem von der Steuereinheit ausgehenden Bus und mehreren Teilnehmern, die aufeinander -folgend an den Bus angeschlossen sind.

Um den Verdrahtungsaufwand beispielsweise im Kfz zu minimieren, geht man dazu über, die Steuersignale zum Ansteuern von Stellgliedern über einen Bus zu versenden, an dem neben einer Steuereinheit auch die Ansteuereinheiten für die Stellantriebsvorrichtungen der einzelnen Teilnehmer angeschlossen sind. Zu einem Bussystem zusammengefasst sind beispielsweise die Stellantriebsvorrichtungen einer Fahrzeug-Klimaanlage, der Fensterheber oder der vorderen Fahrzeugsitze. Damit die Steuereinheit selektiv ein oder mehrere Stellantriebe ansteuern kann, sind diesen Adressen zugeordnet.

In bisherigen Systemen erhalten die Teilnehmer ihre Adresse durch Programmierung eingespeichert, Daisy Chain, Stecker- oder Pin-Kodierung oder durch sequentielles Anschließen der Teilnehmer und Zuweisung der Adresse nach dem Anschließen eines Teilnehmers zugeordnet.

Während das Programmieren bei der Fertigung eines Fahrzeugs noch relativ unproblematisch ist, erfordert dies dann, wenn der gesamte Teilnehmer, das heißt die Stellantriebsvorrichtung mit Ansteuerung, beispielsweise in einer Werkstatt ausgetauscht wird, insoweit einen erhöhten Aufwand. Ferner besteht bezüglich der Logistik das Erfordernis der Einhaltung definierter Bestückungsreihenfolgen mit der damit verbundenen Serviceunfreundlichkeit bzw. der Lieferung vorprogrammierter (voradressierter) Bauteile, was dem Gleichteileprinzip zuwiderläuft. Die Steckerkodierung hat hohe Kosten durch den mechanisehen Aufwand zur Folge und bei der eingespeicherten Adresse oder der Pin-Kodierung steckt der Aufwand in der Logistik, da es sich hierbei ebenfalls nicht mehr um Gleichteile handelt und daher diese nicht ohne weiteres untereinander getauscht werden können. Bei Daisy ist es möglich, die Selbstadressierung der Teilnehmer eines Bussystems über Schalter zum seriellen Trennen der Bus-Verbindungen zwischen den Teilnehmern zu realisieren. Hier sind also Nachteile, insbesondere die elektrische Auftrennung der Busleitung über aktive Bauelemente und der hohe Flächenbedarf für Bussysteme mit vielen Teilnehmern zu nennen.

Bei den bis jetzt bekannten Verfahren gibt es Probleme zum Beispiel hinsichtlich:
- Chargenstreuungen,
- unterschiedlicher Technologien/Hersteller/Aufbau der elektronischen Auswertung,
- Temperatureinflüssen,
- Pegelverschiebungen bei VDD und GND,
- fremder Teilnehmer, d.h. Teilnehmer, die nicht an dem Auswerteverfahren teilnehmen, aber an beliebiger Stelle an den Bus angeschlossen sind und somit nicht kompatibel mit dem Adressvergabeverfahren sind.

Automatisierte Adressvergabeverfahren für Bussysteme sind aus EP-A-0 854 609, DE-A-196 47 668, DE-C-44 04 962, DE-A-44 28 502, WO-A-97/45983 und DE-A-197 56 564 bekannt.

Aus DE-C-40 38 992 schließlich ist ein Verfahren bekannt, bei dem die Adressen der Komponenten einer Gefahrenmeldeaniage automatisch zugeordnet werden. Die Adressierung erfolgt dabei ausgehend von dem zur Zentrale nächstgelegenen Teilnehmer bis zu dem von der Zentrale am entferntesten angeordneten Teilnehmer. Jeder. Teilnehmer weist dabei in jeder der beiden Adern einer Meldeprimärleitung jeweils einen Widerstand und zwischen den beiden Adern mehrere elektrische und elektronische Bauteile auf. Ferner ist jeder Teilnehmer mit einem Kurzschlussschalter versehen, um die beiden Adern kurzzuschließen. Bei kurzgeschlossenem Schalter kann der sich über die beiden zuvor genannten Widerstände ergebende Spannungsabfall (bei Aufprägung eines Messstroms auf der Meldeprimärleitung) messtechnisch ermittelt werden. Sämtlicher dieser Teilnehmer sind seriell in der Meldeprimärleitung angeordnet.

Zu Beginn der Adressierung sendet eine Zentralsteuereinheit ein Kurzschlusssignal zum Schließen der Kurzschlussschalter sämtlicher noch nicht adressierter Teilnehmer aus. Im Anschluss daran wird ein Messstrom aufgeprägt, der in dem von der Zentrale aus betrachtet ersten (also in dem zur Zentral nächst angeordneten) Teilnehmer der Gruppe noch nicht adressierter Teilnehmer einen Spannungsabfall hervorrufen soll. Anschließend wird auf die Meldeprimärleitung ein Adressdatensignal gelegt. Derjenige Teilnehmer, dem noch keine Adresse zugeordnet worden ist und der zuvor einen Spannungsabfall detektiert hat, übernimmt dieses Adressdatensignal in seinen Adressspeicher. Anschließend erfolgt zur weiteren Adressierung wiederum die Vergabe des Kurzschlusssignals, wobei der Kurzschlussschalter des zuvor adressierten Teilnehmers nicht geschlossen wird, sondern vielmehr die Kurschlussschalter sämtlicher bis dahin noch nicht adressierter Teilnehmer angesprochen werden. Beim Aufprägen des Messstroms erzeugt dieser dann in dem nunmehr zur Zentralsteuereinheit am nächsten angeordneten Teilnehmer der Gruppe aus noch nicht adressierten Teilnehmern einen zu detektierenden Spannungsabfall, so dass dieser Teilnehmer in der nächsten Phase, in der auf die Meideprimärleitung wiederum ein Adressdatensignal gelegt wird, diese Adresse in seinem Adressspeicher ablegt und somit ebenfalls adressiert ist. Dieses Verfahren wird fortgesetzt, bis der letzte Teilnehmer adressiert ist.

Bei diesem bekannten Verfahren wird idealisiert davon ausgegangen, dass auf Grund des Kurzschlusses der beiden Adern der Meldeprimärleitung der gesamte Messstrom über den Kurzschlussschalter des am nächsten zur Zentralsteuereinheit angeordneten Teilnehmer der Gruppe aus noch nicht adressierten Teilnehmern fließt. In der Praxis weisen elektronische Schalter, wie sie gemäß dem bekannten Verfahren als Kurzschlussschalter eingesetzt werden, jedoch einen nicht zu vernachlässigenden Ein-Widerstand auf. Mithin fließt also auch ein Teil des Messstroms über den Kurzschlussschalter des benachbarten noch nicht adressierten Teilnehmers und erzeugt über dessen Widerständen ebenfalls einen Spannungsabfall. Es ist also erforderlich, nicht nur den Umstand, dass ein Spannungsabfall detektiert ist, zu erfassen, sondern auch die Größe dieses Spannungsabfalls zu detektieren. Darüber hinaus ist zu bedenken, dass je weiter ein noch nicht adressierter Teilnehmer von der Zentralsteuereinheit angeordnet ist, der Messstrom und damit der detektierbare Spannungsabfall sich verringert, was allein schon daran liegt, dass der Messstrom, der über den geschlossenen Kurzschlussschalter eines relativ weit von der Zentralsteuereinheit angeordneten Teilnehmers über die in den Adern der Meldeprimärleitung angeordneten Widerstände der diesem Teilnehmer vorgeschalteten, bereits adressierten Teilnehmer fließen muss. Die Auswertung und die zuverlässige Detektierung der Spannungsabfälle bei dem bekannten Verfahren ist also nicht trivial, was schaltungstechnischen und Programmieraufwand mit sich bringt.

In WO-A-02/069149 (Stand der Technik nach Artikel 54(3) EPÜ), ist ein Verfahren zum Identifizieren von Knoten in einem Bus einer Fahrzeugklimaanlage beschrieben, bei dem jeder Knoten durch die Verbindung eines Bus mit einem Busteilnehmer definiert ist. Zur Identifikation speisen sämtliche Teilnehmer einen Identifizierstrom in den Bus ein, wobei die Ströme in den Knotenpunkten erfasst werden. Anhand des Wertes des Stroms in einem Knotenpunkt kann die Lage des Knotenpunktes längs des Bus und damit der an dem betreffenden Knotenpunkt angeschlossene Teilnehmer identifiziert werden. Dieses bekannte Verfahren läuft in einem einzigen Schritt ab und erfordert eine relativ aufwendige Stromdetektion mit relativ hoher Auflösung, um die einzelnen Knotenpunkte anhand der unterschiedlichen Ströme identifizieren zu können.

Ein zu dem vorgenannten Verfahren ähnliches Verfahren ist in EP-A-0 843 260 beschrieben. WO-A-00 04428 beschreibt ein Verfahren zur Adressierung der Teilnehmer eines Bussystems mit einer Steuereinheit, einem von der Steuereinheit ausgehenden Bus und mit mehreren adressierbaren Teilnehmern, die an dem Bus angeschlossen sind, wobei bei diesem Verfahren
a) jeder noch nicht adressierte Teilnehmer zum Identifizieren einen Identifizierstrom (Identifikationssignal) in eine Identifikationsleitung des Busses einspeist, wobei sämtliche Identifizierströme durch den Bus in Richtung auf die Steuereinheit fließen,
b) jeder noch nicht adressierte Teilnehmer den durch die Identifikationsleitung des Busses fließenden Strom detektiert,
c) dem so identifizierten Teilnehmer über einen Kommunikationsbus zwecks Adressierung eine Adresse zugeordnet wird.

Bei dem Bussystem nach EP-A-0 980 165 erfolgt die Teilnehmeridentifizierung durch das Anlegen einer Spannung am Kommunikationsbus von Seiten der Steuereinheit und der anschließenden Messung und Speicherung von Referenz- bzw. Abstandsspannungen an den einzelnen Teilnehmern. Gemäß EP-A-0 489 346 sind Kurzschlussschalter für die Teitnehmeridentifizierung vorgesehen, wobei die beim Kurzschluss gemessene Spannung für die Adresszuweisung maßgeblich ist.

Eine Aufgabe der Erfindung ist es, ein Verfahren zum Adressieren der Teilnehmer eines Bussystems zu schaffen, das mit möglichst geringem Schaltungsaufwand eine zuverlässige automatische Adressierung der Teilnehmer des Bussystems gewährleistet.

Zur Lösung dieser Aufgabe wird mit der Erfindung ein Verfahren zum Adressieren der Teilnehmer eines Bussystems nach Anspruch 1 vorgeschlagen; einzelne Weiterbildungen dieses Verfahrens sind in den Unteransprüchen angegeben.

Mit dem erfindungsgemäßen Verfahren lassen sich die Teilnehmer eines insbesondere seriellen Bussystems automatisch adressieren. Dabei wird die Adressierprozedur durch die Steuereinheit des Bussystems automatisch durchgeführt. Zum Adressieren werden mehrere Zyklen durchfahren, wobei die Anzahl an Adressierzyklen gleich mindestens der Anzahl der adressierbaren Teilnehmer des Bussystems ist. In jedem Adressierzyklus wird also genau ein Teilnehmer identifiziert und adressiert, wobei die Identifikation verifiziert werden kann, indem z.B. die Identifikation zumindest zweimal durchgeführt wird und erst bei Übereinstimmung der Identifikationsergebnisse dem Teilnehmer eine Adresse zugeordnet wird.

Zu Beginn eines Adressiervorgangs speisen sämtliche noch nicht adressierten Teilnehmer in den Knotenpunkt des Bus, also in den Verbindungspunkt zwischen Bus und Teilnehmer einen Identifizierstrom ein. Das bedeutet, dass an unterschiedlichen Stellen des Bus unterschiedlich große Ströme fließen. So fließt zwischen dem bei Betrachtung des Bus von der Steuereinheit aus am weitesten von dieser entfernt an dem Bus angeschlossenen letzten Teilnehmer und dem davor liegenden Teilnehmer ein Strom, der gleich dem Identifizierstrom ist. Zwischen dem vorletzten und dem drittletzten Teilnehmer fließt ein Strom, der das Zweifache des Identifizierstroms beträgt. Zwischen dem ersten Teilnehmer und der Steuereinheit schließlich fließt ein Strom, der gleich der Summe sämtlicher Identifizierströme ist.

Jeder adressierbare Teilnehmer des Bussystems detektiert den Strom durch seinen Knotenpunkt. Die Identifikation eines noch nicht adressierten Teilnehmers erfolgt nun erfindungsgemäß dadurch, dass in jedem Teilnehmer untersucht wird, wie groß der detektierte Strom ist. Erfolgt beispielsweise die Strommessung bei jedem Teilnehmer bei Betrachtung des Bus von der Steuereinheit aus hinter dem Knotenpunkt, so lässt sich ein noch nicht adressierter Teilnehmer dadurch identifizieren, dass der von ihm detektierte Stromwert kleiner als ein Schwellwert ist. Bei diesem Teilnehmer handelt es sich um den bei Betrachtung des Bus von der Steuereinheit aus am weitesten von dieser entfernt an dem Bus angeschlossenen letzten noch nicht adressierten Teilnehmer. Dem auf diese Weise identifizierten Teilnehmer wird entweder direkt im Anschluss an seine Identifikation oder nach einer Verifikation seiner Identifizierung durch nochmalige Identifikation und Vergleich beider Identifikationsergebnisse von der Steuereinheit eine Adresse zugeordnet. Diese Adresse kann nun im Teilnehmer abgespeichert werden. Beim nächsten Adressierzyklus nimmt der zuletzt adressierte Teilnehmer nicht mehr teil. Folglich wird im nächsten Adressierzyklus wiederum der bei Betrachtung des Bus von der Steuereinheit aus am weitesten von dieser entfernt an dem Bus angeschlossene letzte noch nicht adressierte Teilnehmer identifiziert. Dieses Verfahren wird so lange fortgesetzt, bis sämtliche noch nicht adressierten Teilnehmer adressiert sind.

Vorstehend wurde derjenige noch nicht adressierte Teilnehmer identifiziert, der einen Strom misst, welcher kleiner als ein Schwellwert ist. Liegt nun die Strommessung bzw. Stromdetektion bei Betrachtung des Bus von der Steuereinheit aus vor dem Knotenpunkt, so misst auch der am weitesten von der Steuereinheit entfernt an dem Bus angeschlossene letzte Teilnehmer bei Einspeisung der Identifizierströme einen Strom, nämlich den von diesem Teilnehmer selbst eingespeisten Identifizierstrom. In diesem Fall lässt sich der letzte noch nicht adressierte Teilnehmer dadurch identifizieren, dass der von ihm detektierte Strom kleiner als der zweifache Wert des Identifizierstroms ist.

Bei der vorstehenden Beschreibung des erfindungsgemäßen Verfahrens wird davon ausgegangen, dass während eines Adressierzyklus mit Ausnahme der Identifizierströme keinerlei Ströme über den Bus fließen. Dies ist in der Praxis nicht unbedingt immer gewährleistet und auch nicht wünschenswert, da die Teilnehmer eines Bussystems unter anderem zur störfesten Ausbildung des Bus in diesen Ruheströme einprägen und auf diese Weise den Bus an dessen Knotenpunkten auf einem definierten Potential halten. Im Stand der Technik existieren Bussysteme, bei denen sowohl adressierbare als auch nicht adressierbare Teilnehmer an einen Bus angeschlossen sind. Im Falle einer Fahrzeugklimaanlage beispielsweise nutzt man adressierbare Teilnehmer zur Ansteuerung von Aktoren wie beispielsweise Stellmotoren, während nicht adressierbare (Standard-)Teilnehmer Sensoren (beispielsweise Schadstoffsensor, Temperatursensor, Feuchtigkeitssensor, Sonnensensor) umfassen. Die nicht adressierbaren Teilnehmer (Standard-Teilnehmer) weisen keinerlei Adressierlogik auf, lassen sich also nicht über die Steuereinheit adressieren. Zumeist lässt sich bei diesen Standard-Teilnehmern auch die Ruhestromeinspeisung nicht abstellen.

Zum Adressieren eines Bussystems mit adressierbaren Teilnehmern und nicht adressierbaren Teilnehmern wird daher gemäß einer vorteilhaften Weiterbildung der Erfindung vorgeschlagen, vor der Identifizierstromdetektion eine Strommessung durchzuführen, mit der die auf dem Bus fließenden Ruheströme erfasst werden. Jeder noch nicht adressierte Teilnehmer speichert den durch den ihm zugeordneten Knotenpunkt fließenden Ruhestrombetrag ab. Nach Einspeisung der Identifizierströme wird dann derjenige noch nicht adressierte Teilnehmer identifiziert, der bei Einspeisung der Identifizierströme durch sämtliche noch nicht adressierten Teilnehmer gegenüber seiner vorherigen Stromdetektion keinerlei Stromdifferenz oder lediglich eine Stromdifferenz detektiert, die kleiner als ein vorgebbarer zweiter Schwellwert ist. Dem auf diese Weise identifizierte Teilnehmer kann anschließend von der Steuereinheit eine Adresse zugewiesen werden.

Mit der nachfolgend beschriebenen weiteren Variante des erfindungsgemäßen Verfahrens lässt sich eine automatische Adressierung in einem Bussystem durchführen, dessen adressierbare Teilnehmer während der Adressierung Ruheströme in den Bus einspeisen. Zu Beginn eines Adressierzyklus speist somit jeder noch nicht adressierte Teilnehmer einen Ruhestrom in den Bus ein. Dann erfolgt durch jeden noch nicht adressierten Teilnehmer eine Detektion des durch den Knotenpunkt fließenden Ruhestroms. Jeder Teilnehmer speichert den entsprechenden Stromwert ab. Als nächstes müsste nun die Einprägung der Identifizierströme durch jeden noch nicht adressierten Teilnehmer erfolgen. Hierdurch kann jedoch bei einer relativ großen Anzahl von Teilnehmern eine derart hohe Strombelastung auf den Bus ausgeübt werden, dass die zulässigen Stromlasten überschritten werden. Daher wird bei dieser Variante der Erfindung untersucht, ob noch nicht adressierte Teilnehmer existieren, die einen Differenzruhestrom detektieren, der bereits oberhalb eines vorgebbaren dritten Schwellwerts liegt. Ist dies der Fall, so wird davon ausgegangen, dass bei Betrachtung des Bus von der Steuereinheit aus hinter dem letzten der noch nicht adressierten Teilnehmer, die einen oberhalb des dritten Schwellwerts liegenden Ruhestrom detektiert haben, noch nicht adressierte Teilnehmer vorhanden sind. Da die Identifikation eines noch nicht adressierten Teilnehmers vom von der Steuereinheit aus betrachtet hinteren Ende des Bus aus erfolgt, brauchen sich also die vorderen noch nicht adressierten Teilnehmer, die bei der Ruhestromdetektion einen Strom ermittelt haben, der oberhalb des dritten Schwellwerts liegt, nicht an der weiteren Identifikation zu beteiligen. Diese vorderen Teilnehmer speisen also nachfolgend keinen Identifizierstrom in den Bus ein. Mit anderen Worten speist nur ein Teil der Gruppe von noch nicht adressierten Teilnehmer einen Identifizierstrom in den Bus ein, was den Vorteil hat, dass nun nicht mehr zu befürchten ist, dass die maximal zulässige Strombelastung des Bus überschritten wird. Die Identifizierung der Identifizierströme einspeisenden noch nicht adressierten Teilnehmer erfolgt dann wie oben beschrieben.

Schließlich lässt sich mit dem erfindungsgemäßen Verfahren aber auch ein Bussystem adressieren, das aus nicht adressierbaren Teilnehmer und adressierbaren Teilnehmern besteht. Da über den Bus dieses Bussystems zu jeder Phase der Adressierung der von den nicht adressierbaren Teilnehmern eingespeiste Ruhestrom fließt, erfolgt zu Beginn eines Adressierzyklus zunächst die Detektion dieser Ruheströme in den einzelnen Knotenpunkten. Die dabei detektierten Ruhestromwerte werden von den noch nicht adressierten Teilnehmern abgespeichert. Anschließend erfolgt die Einspeisung der Ruheströme durch die noch nicht adressierten Teilnehmer. Nun wird wieder unter dem Gesichtspunkt der Minimierung der Strombelastung in der oben beschriebenen Weise selektiert, welche noch nicht adressierten Teilnehmer an dem weiteren Identifikations- und Adressierverfahren teilnehmen. Es werden also wieder diejenigen noch nicht adressierten Teilnehmer ermittelt, die bei Einspeisung der Ruheströme durch sämtliche noch nicht adressierten Teilnehmer einen Stromwert detektieren, der über einem fünften Schwellwert liegt. Dieser fünfte Schwellwert ist vorteilhafterweise gleich dem oben genannten dritten Schwellwert. An dem weiteren Adressierverfahren nehmen dann lediglich noch diejenigen noch nicht adressierten Teilnehmer teil, die bei Betrachtung des Bus von der Steuereinheit aus hinter dem letzten noch nicht adressierten Teilnehmer angeordnet sind, der bei der Ruhestromdetektion einen Stromwert detektiert hat, welcher oberhalb des fünften Schwellwerts liegt. Die am weiteren Adressierverfahren beteiligten noch nicht adressierten Teilnehmer speisen nun Identifizierströme in den Bus ein, wobei derjenige noch nicht adressierte Teilnehmer dieser Gruppe identifiziert wird, der einen Strom detektiert, welcher gegenüber seinem abgespeicherten Stromwert keine Stromdifferenz oder lediglich eine Stromdifferenz aufweist, die kleiner als ein vorgebbarer sechster Schwellwert ist. Dem so identifizierten Teilnehmer kann dann von der Steuereinheit eine Adresse zugeordnet werden.

Die Zuordnung einer Adresse durch die Steuereinheit erfolgt entweder durch gezielte Übermittlung an den identifizierten Teilnehmer oder aber dadurch, dass vor der Identifikation zunächst sämtliche noch nicht adressierten Teilnehmer jeweils die gleiche Adresse übermittelt wird und lediglich der anschließend identifizierte Teilnehmer diese Adresse als seine Adresse annimmt, d.h. die übrigen noch nicht adressierten Teilnehmer die ihnen zuvor übermittelte Adresse nicht annehmen. Vor der Zuordnung der Adresse kann noch ein Verifikationszyklus zur Bestätigung der Identifikation erfolgen.

Vorstehend wurde im Zusammenhang mit der Beschreibung der Erfindung jeweils von einer Stromdetektion gesprochen. Selbstverständlich kann diese Stromdetektion auch durch eine Spannungsdetektion ersetzt werden bzw. der Stromdetektion eine Spannungsdetektion vorgeschaltet sein. Die Stromdetektion erfolgt durch Ermittlung des Spannungsabfalls über z.B. einen Shunt-Widerstand, wobei jedem adressierbaren Teilnehmer ein derartiger Shunt-Widerstand des Bus zugeordnet ist. Sämtliche Shunt-Widerstände sind demzufolge längs des Bus in Reihe geschaltet.

Die Erfindung wird nachfolgend anhand zweier Ausführungsbeispiele näher erläutert. Im einzelnen zeigen dabei:
- Fign. 1 bis 6: diverse Phasen eines ersten Bussystems während einer automatischen Adressierung gemäß einem ersten Ausführungsbeispiel der Erfindung,
- Fign. 7 bis 10: diverse Phasen eines ersten Bussystems während einer automatischen Adressierung gemäß einem zweiten Ausführungsbeispiel der Erfindung und
- Fign. 11 bis 17: diverse Phasen eines zweiten Bussystems während einer automatischen Adressierung gemäß einem weiteren Ausführungsbeispiel der Erfindung.

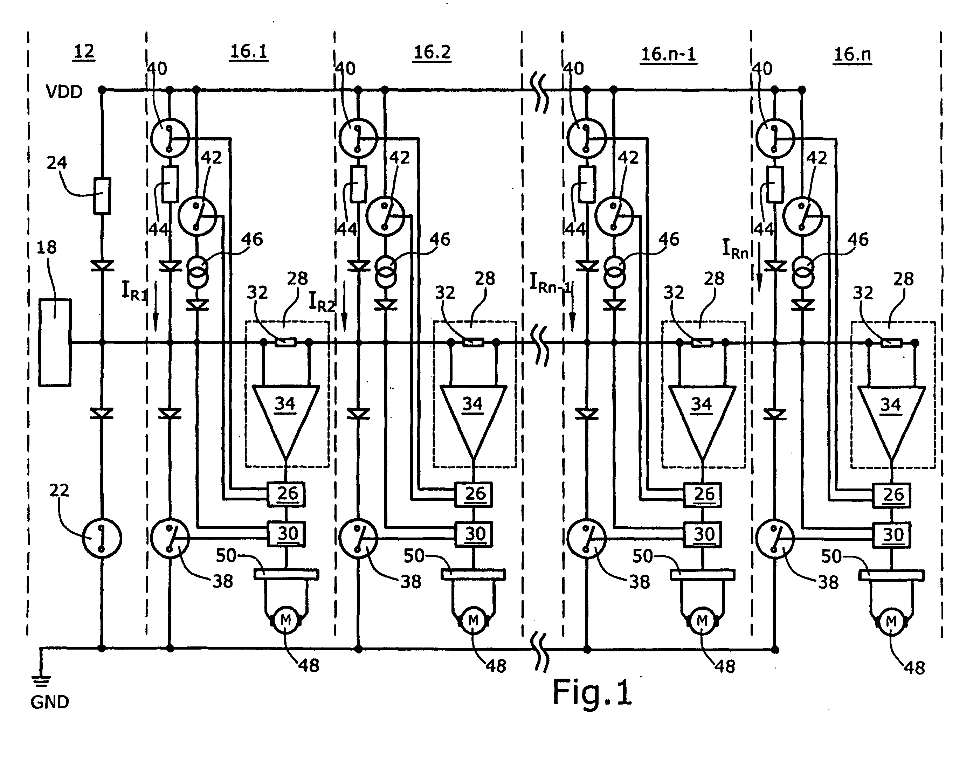

In Fig. 1 ist der Aufbau eines seriellen Bussystems 10 dargestellt (z.B. LIN-Bus). Das Bussystem 10 weist eine Steuereinheit 12 (Master) auf, an die ein Bus 14 angeschlossen ist. Längs des Bus 14 sind mit diesem mehrere adressierbare Teilnehmer 16 (Slave) verbunden. Sämtliche Teilnehmer 16 sowie die Steuereinheit 12 sind an VDD-Potential und an Massepotential (GND) angeschlossen und können diese Potentiale wahlweise auf den Bus 14 legen.

Die Steuereinheit 12 weist eine bei 18 angedeutete Steuerschaltung auf, die Steuer- und Adressiersignale auf den Bus 14 legt bzw. über den Bus 14 Signale von den Teilnehmern 16 empfängt und einen Schalter einen 20,22 ansteuert, mittels dessen der Bus 14 durch die Steuereinheit 12 mit GND verbindbar ist. Zwischen VDD und dem Bus 14 befindet sich ein Pull-Up-Widerstand 24.

Sämtliche Teilnehmer 16 des Bussystems 10 gemäß Fig. 1 sind mit einer Adressierlogik 26 ausgestattet, die mit einem Detektor 28 und einer Steuerschaltung 30 verschaltet ist. Die Steuerschaltung 30 ist mit dem Bus 14 verbunden und der Detektor 28 misst über einen in dem Bus 14 befindlichen Shunt-Widerstand 32 den im Bereich des betreffenden Teilnehmers über den Bus 14 fließenden Strom als Spannungsabfall, der über einen Verstärker 34 verstärkt wird. Andere Ausgestaltungen des Detektors 28 sind ebenfalls möglich, solange der Detektor 28 in der Lage ist, den Strom durch den Bus 14 im Bereich des Anschluss-Knotenpunktes 36 eines Teilnehmers 16 messtechnisch zu erfassen.

Von der Steuerschaltung 30 wird in jedem Teilnehmer zusätzlich auch ein Schalter 38 gesteuert, während die Schalter 40,42 jedes Teilnehmers von dessen Adressierlogik 26 gesteuert werden. Der Schalter 38 verbindet den Bus 14 wahlweise mit GND, während der Schalter 40 den Bus 14 über einen Pull-Up-Widerstand 44 auf VDD und der Schalter 42 den Bus 14 mit einer Stromquelle 46 verbindet, die einen für die Identifizierung eines Teilnehmers 16 erforderlichen Identifizierstrom I_{I} in den Bus 14 einspeist. Anstelle einer Stromquelle 46 kann man auch einen Pull-Up-Widerstand vorsehen, sofern das VDD-Potential stabil ist. In diesem Ausführungsbeispiel steuern die Teilnehmer 16 ihnen jeweils zugeordnete Stellglieder 48 an, die über eine Schnittstelle 50 mit der Steuerschaltung 30 des betreffenden Teilnehmers 16 verbunden sind. Mit Hilfe der Pull-Up-Widerstände und des Schalters 40 (im geschlossenen Zustand) wird der Bus 14 im Bereich jedes Teilnehmers 16 auf VDD-Potential gelegt. Bei geschlossenem Schalter 40 wird in den Bus 14 ein Ruhestrom I_{R} eingespeist. Die Verbindung des Bus 14 mit VDD über die Pull-Up-Widerstände 44 bewirkt unter anderem eine Störfestigkeit des Bus 14, was an sich bei Bus-Applikationen der hier in Rede stehenden Art bekannt ist.

Der Vollständigkeit halber sei noch erwähnt, dass in sämtlichen die oben erwähnten Schalter aufweisenden Verbindungsleitungen von Steuereinheit 12 und Teilnehmern 16 Verpolschutzdioden vorgesehen sind, die jedoch, wie die Schalter 38 der Teilnehmer 16 für die nachfolgend beschriebene automatische Adressierung keine Bedeutung haben.

Die Ausgangssituation für die Adressierung der Teilnehmer 16 ist in Fig. 1 gezeigt. Der Schalter 22 der Steuereinheit 12 sowie die Schalter 40 der Teilnehmer 16 sind geschlossen, während die Schalter 38 der Teilnehmer 16 stets geöffnet bleiben. In dieser Situation werden von den Teilnehmern 16, die nachfolgend zur besseren Unterscheidung untereinander mit 16.1, 16.2, 16.n-1 und 16.n bezeichnet werden (wobei n eine Gesamtanzahl an Teilnehmern ist), Ruheströme I_{R1}, ... I_{Rn} eingespeist. An dieser Stelle sei bemerkt, dass die Ruhestromeinspeisung während der Adressierung nicht zwingend erforderlich ist. Wird auf die Ruhestromeinspeisung verzichtet, so ist zu Beginn der Adressierung lediglich der Schalter 22 der Steuereinheit 12 geschlossen, während sämtliche anderen Schalter der Steuereinheit 12 und der Teilnehmer 16 geöffnet sind.

Für den Fall der Ruhestromeinspeisung fließen in Höhe der unterschiedlichen Teilnehmer 16 durch den Bus 14 unterschiedlich große Ströme, die mit Hilfe des Detektors 28 detektiert werden. Der Stromfluss der Ruheströme erfolgt ausgehend von den Anschluss-Knotenpunkten 36 der Teilnehmer 16 zur Steuereinheit 12 hin, in der die Ruheströme nach GND abfließen. Wegen der Anordnung der Detektoren 28 hinter den Anschluss-Knotenpunkten 36 (bei Betrachtung des Bus 14 von der Steuereinheit 12) detektiert der Detektor 28 des von der Steuereinheit 12 aus betrachtet am weitesten entfernt an den Bus 14 angeschlossene Teilnehmer 16.n keinen Ruhestrom, der Detektor 28 des Teilnehmers 16.n-1 den Ruhestrom I_{Rn}, der Detektor 28 des Teilnehmers 16.2 einen Ruhestrom, der gleich der Summe der Ruheströme I_{R3} bis I_{Rn} der Teilnehmer 16.3 (nicht dargestellt) bis 16.n ist, und schließlich der Detektor 28 des Teilnehmers 16.1 einen Ruhestrom, der gleich der Summe der Ruheströme I_{R2} bis I_{Rn} ist. Die jeweiligen von den Teilnehmern 16.1 bis 16.n detektierten Ströme während dieser Phase werden in der Adressierlogik 26 abgespeichert.

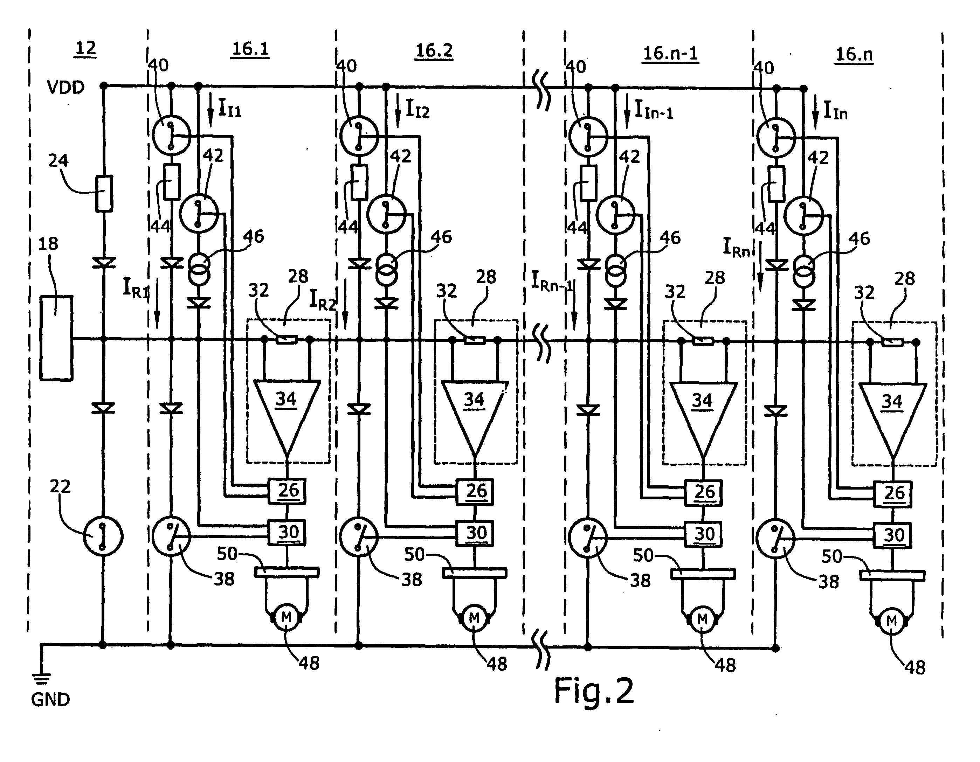

Nach einer definierten Zeit schließen die noch nicht adressierten Teilnehmer 16 ihre Schalter 42 (zu Beginn der Adressierung also sämtlicher Teilnehmer - siehe Fig. 2). Wie oben im Zusammenhang mit der Einspeisung der Ruheströme beschrieben, stellen sich somit nach Einspeisung der Adressierströme I_{I1} bis I_{In} in den einzelnen Abschnitten des Bus 14 unterschiedliche große Ströme ein, die wiederum von den Detektoren 28 detektiert werden. Bis auf den Detektor 28 des letzten Teilnehmers 16.n wird in sämtlichen anderen Teilnehmem 16.1 bis 16.n-1 nun ein Strom auf den Bus 14 detektiert, der um die Größe eines Identifizierstromes (die Identifizierströme sämtlicher Teilnehmer sind gleich groß) oberhalb des zuvor gemessenen und in der Adressierlogik 26 abgespeicherten Wertes ist. Mit anderen Worten ist also der Teilnehmer 16.n identifizierbar.

Wird nun im nächsten Schritt von der Steuereinheit 12 auf den Bus 14 ein Adressiersignal gelegt, so wird dieses nur von dem Teilnehmer 16.n angenommen und in der Adressierlogik 26 dieses Teilnehmers abgelegt.

Der auf diese Weise adressierte Teilnehmer 16.n nimmt am weiteren Adressierverfahren nicht mehr teil.

Wie bereits oben dargelegt, bedarf es bei der Adressierung nicht notwendigerweise einer Ruhestrommessung. Damit sind in der Adressierlogik 26 der Teilnehmer 16 auch keine Stromwerte abgespeichert, sobald die Identifizierstromeinspeisung beginnt. Der während des ersten Adressierzyklus zu adressierende Teilnehmer lässt sich dann anhand des Umstandes identifizieren, dass sein Detektor 28 trotz Identifizierstromeinspeisung keinen Stromfluss detektiert.

Für den Fall, dass die Stromdetektion jedem Teilnehmer 16 vor dessen Anschluss-Knotenpunkt 36 (bei Betrachtung des Bus 14 von der Steuereinheit 12 aus) erfolgt, ist eine Identifizierung eines in einem Adressierzyklus zu identifizierenden Teilnehmers dadurch gegeben, dass der Detektor 28 dieses Teilnehmers einen Strom detektiert, der gleich dem Identifizierstrom ist, während die anderen Teilnehmer einen Strom detektieren, der mindestens das Doppelte des Identifizierstromes beträgt. Auch auf diese Weise ist also dann eine Identifizierung eines Teilnehmers gegeben.

Vorstehend wurde der erste Adressierzyklus der automatischen Adressierung für den Fall beschrieben, dass die Steuereinheit 12 ein Adressiersignal nach der Identifikation eines Teilnehmers auf den Bus 14 legt. Alternativ ist es aber auch möglich, das Adressiersignal vor der Identifikation auf den Bus zu legen und in der Adressierlogik 26 sämtlicher Teilnehmer 16 abzuspeichern. In diesem Fall übernimmt nach der Identifikation lediglich der identifizierte Teilnehmer das zuvor erhaltene Adressiersignal als seine Adresse, während dieses Adressiersignal in der Adressierlogik 26 der anderen Teilnehmer wieder gelöscht wird.

Nach Abschluss des ersten Adressierzyklus nimmt der adressierte Teilnehmer 16.n an dem weiteren Verfahren nicht mehr teil. D.h., dass der Schalter 42 des Teilnehmers 16.n geöffnet bleibt. Diese Situation ist in Fig. 2 dargestellt. Auf die oben beschriebene Weise lässt sich nun der Teilnehmer 16.n-1 identifizieren und somit auch adressieren.

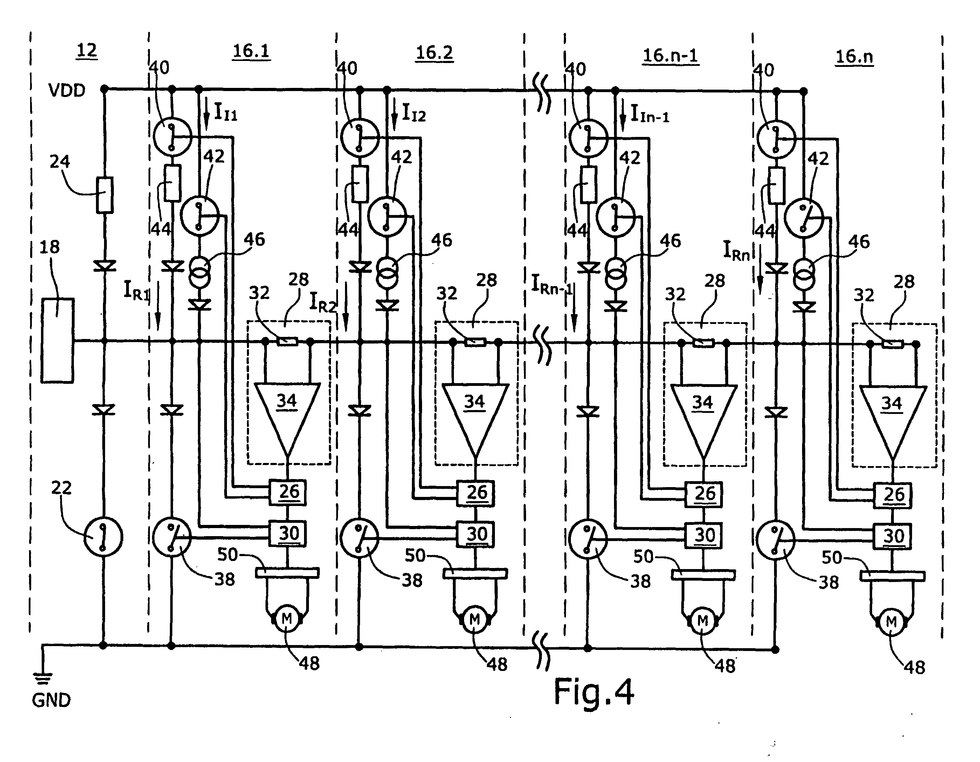

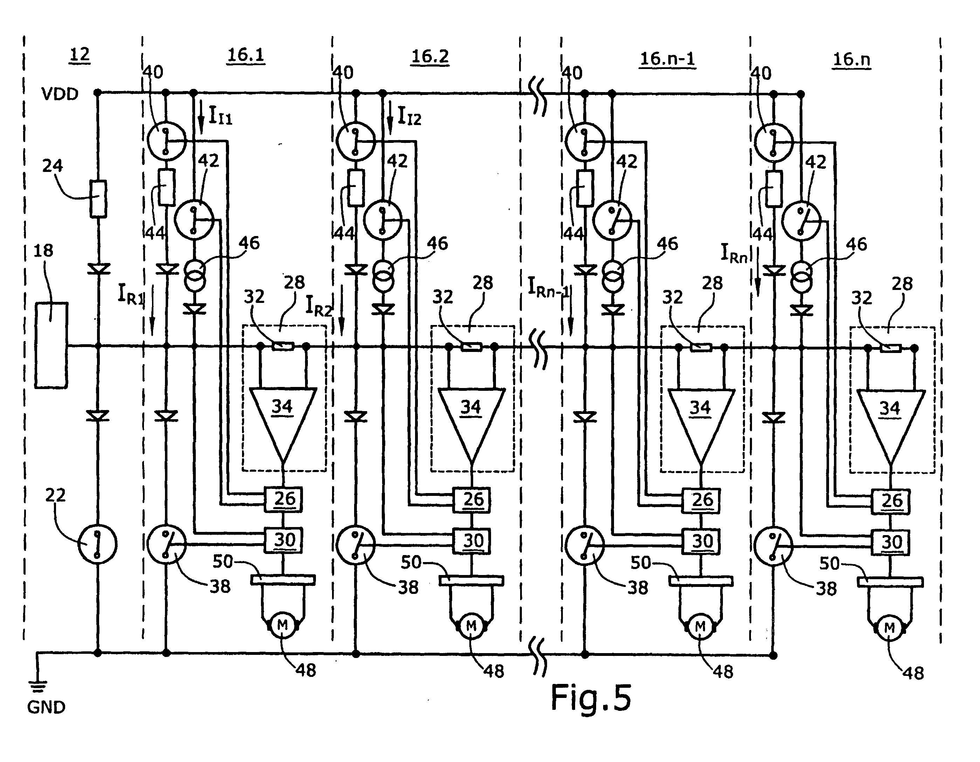

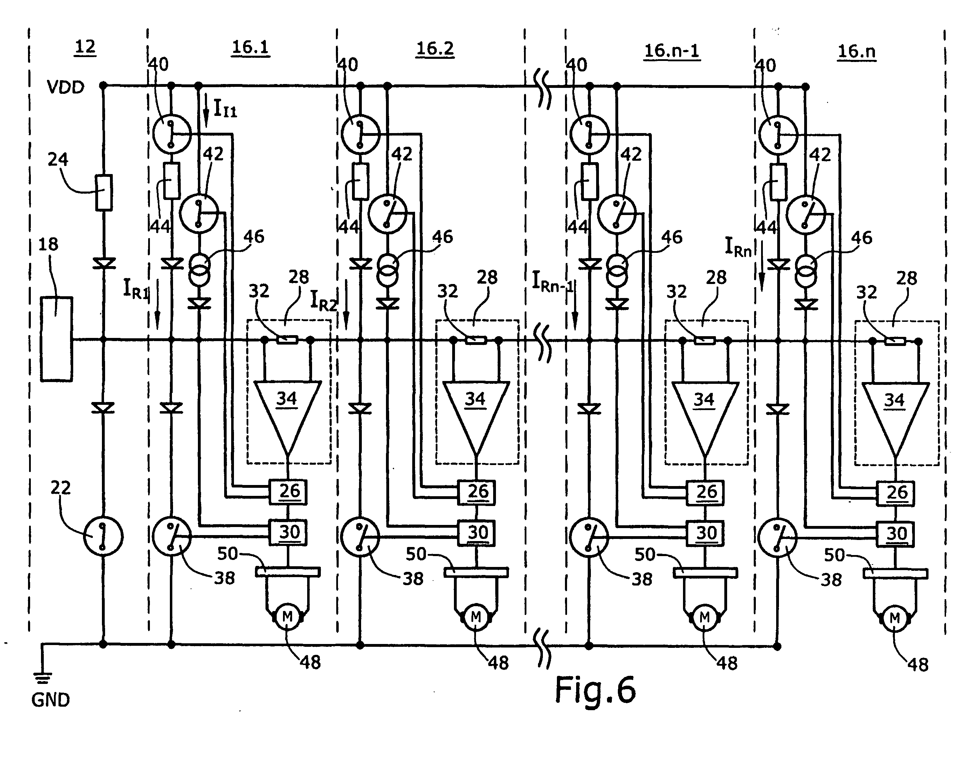

Das zuvor beschriebene Verfahren wird fortgeführt, bis sämtliche Teilnehmer identifiziert sind. Die diesbezüglich relevanten Zustände des Bussystems 10 zur Identifizierung und Adressierung des Teilnehmers 16.2 sind in den Fign. 4 und 5 gezeigt, während in Fig. 6 die Zustände zur Identifizierung und Adressierung des Teilnehmers 16.1 gezeigt sind. In den Fign. 4 und 6 sind jeweils die Schaiterstellungen bei der Identifizierstromeinspeisung gezeigt, während Fig. 5 die Schaltersteilungen nach der erfolgten Identifikation des Teilnehmers 16.2 zeigt. Die Situation nach der Identifikation des Teilnehmers 16.1 entspricht der in Fig. 1 gezeigten.

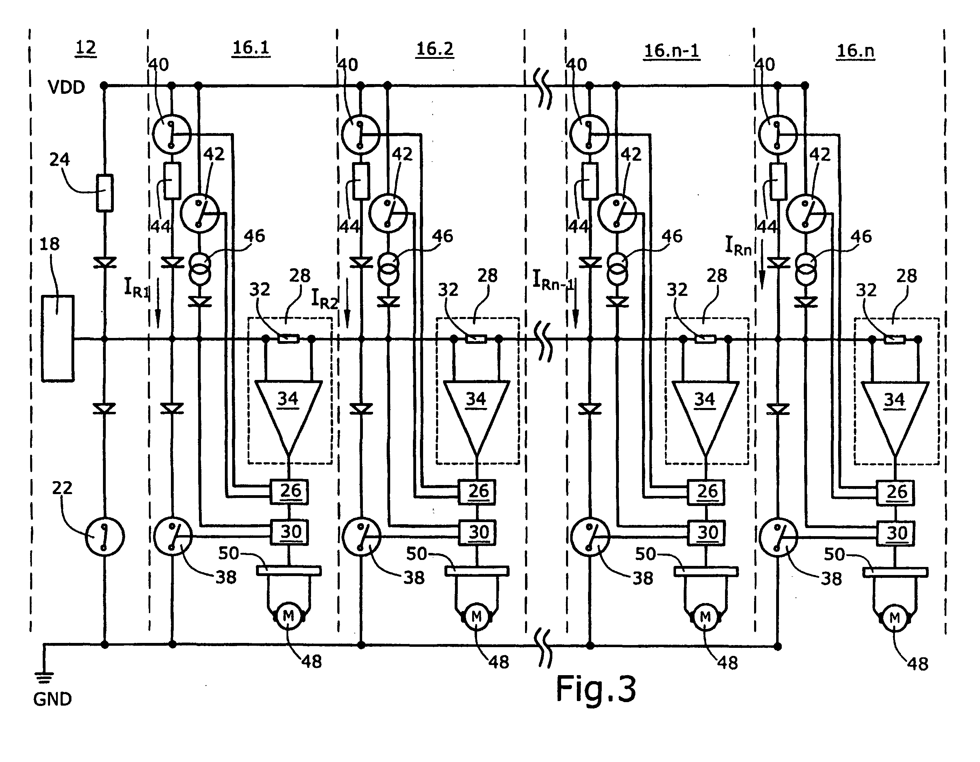

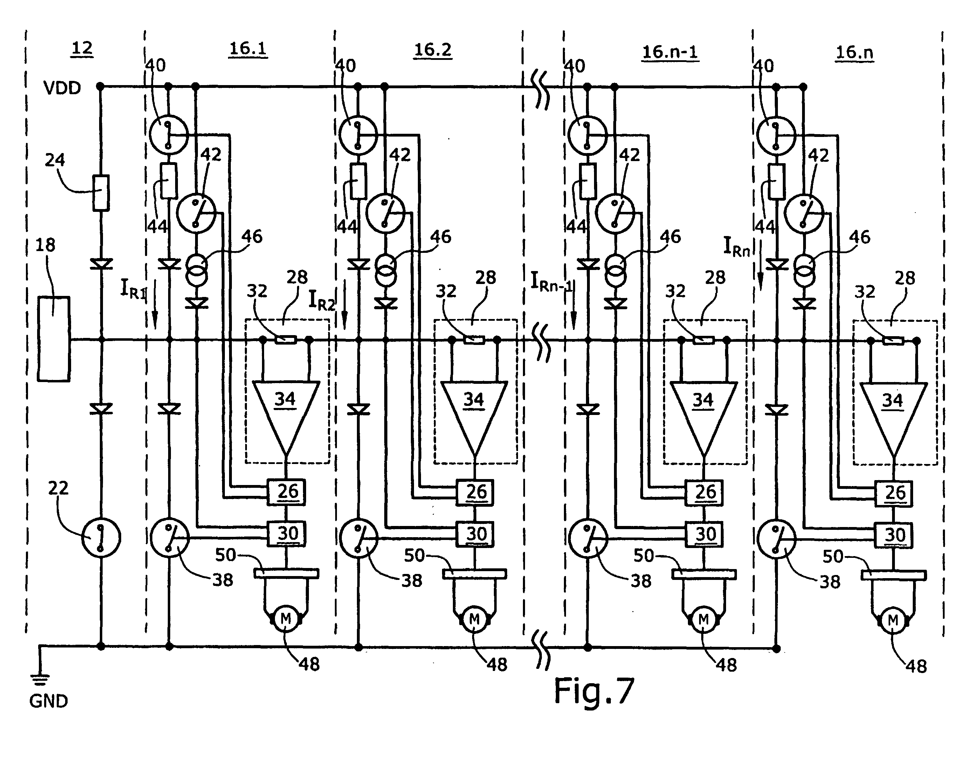

Anhand der Fign. 7 bis 10 wird nachfolgend ein alternatives Adressierungskonzept beschrieben. Der Aufbau des Bussystems 10 dieser Figuren ist identisch zu dem Aufbau des Bussystems 10 der Fign. 1 bis 6, so dass insoweit auch die gleichen Bezugszeichen verwendet werden.

Bei dem Adressierverfahren gemäß Fign. 7 bis 10 wird berücksichtigt, dass der auf dem Bus 14 fließende Strom einen vorgegebenen Maximalwert nicht überschreitet. Diese Randbedingung ist beispielsweise bei LIN-Bus-Applikationen gegeben.

Die Ausgangssituation der Adressierung gemäß diesem alternativen Verfahren ist in Fig. 7 gezeigt. Sämtliche Teilnehmer 16 speisen ihre Ruheströme ein.

In einer ersten Phase wird nun wiederum in jedem Teilnehmer 16 der über den Bus 14 jeweils fließende Strom detektiert. Liegt dieser detektierte Strom für mindestens einen Teilnehmer über einem vorgegebenen Schwellwert, so wird dies dahingehend interpretiert, dass bei Betrachtung des Bus 14 von der Steuereinheit 12 aus hinter diesem Teilnehmer noch nicht adressierte Teilnehmer angeschlossen sind, so dass für den weiteren Adressiervorgang der besagte Teilnehmer und sämtliche Teilnehmer, die zwischen diesem Teilnehmer und der Steuereinheit 12 an dem Bus 14 angeschlossen sind, nicht mehr beteiligt sind.

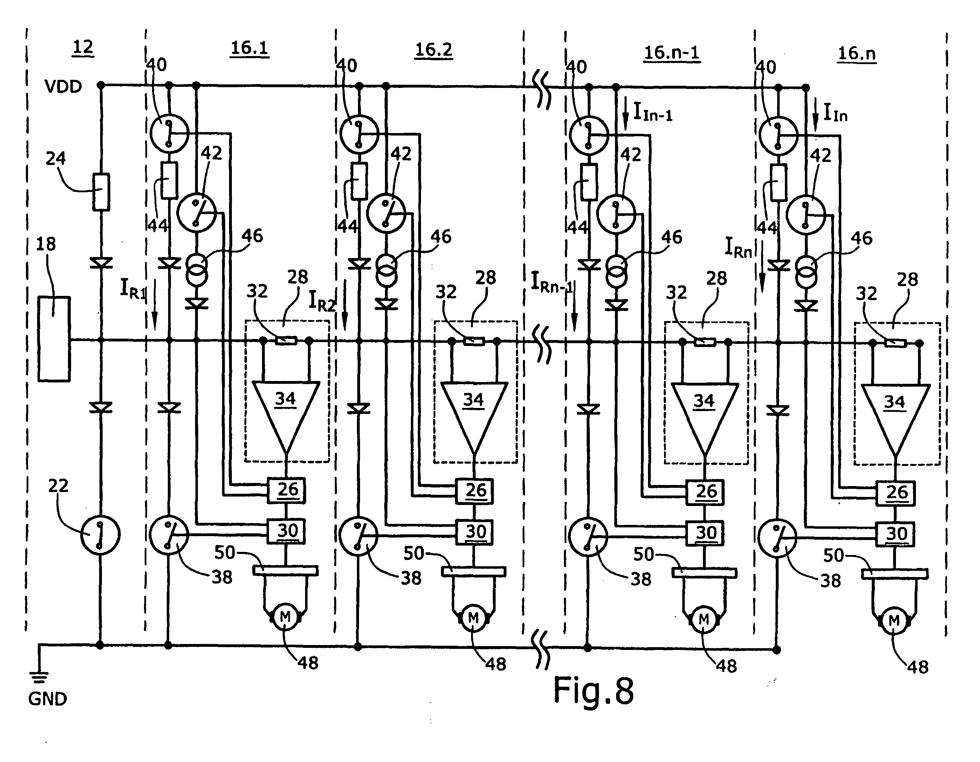

Diese Situation wird anhand der Fig. 8 erläutert. Es wird angenommen, dass gemäß Fig. 7 der Teilnehmer 16.2 einen über einem Schwellwert liegenden Strom im Bus 14 detektiert hat. Bei der anschließenden Identifizierstromeinspeisung nehmen daher die Teilnehmer 16.1 und 16.2 nicht teil, so dass Identifizierströme von den Teilnehmern 16.3 (nicht dargestellt) bis 16.n eingespeist werden. Die Identifikation innerhalb dieser Gruppe von Identifizierströme einspeisenden Teilnehmern erfolgt dann auf die oben beschriebene Art, wobei im ersten Adressierzyklus der Teilnehmer 16.n identifiziert wird und diesem Teilnehmer eine Adresse zugeordnet werden kann. Während des nächsten Identifizierzyklus bleibt der Schalter 42 des Teilnehmers 16.n stets geöffnet.

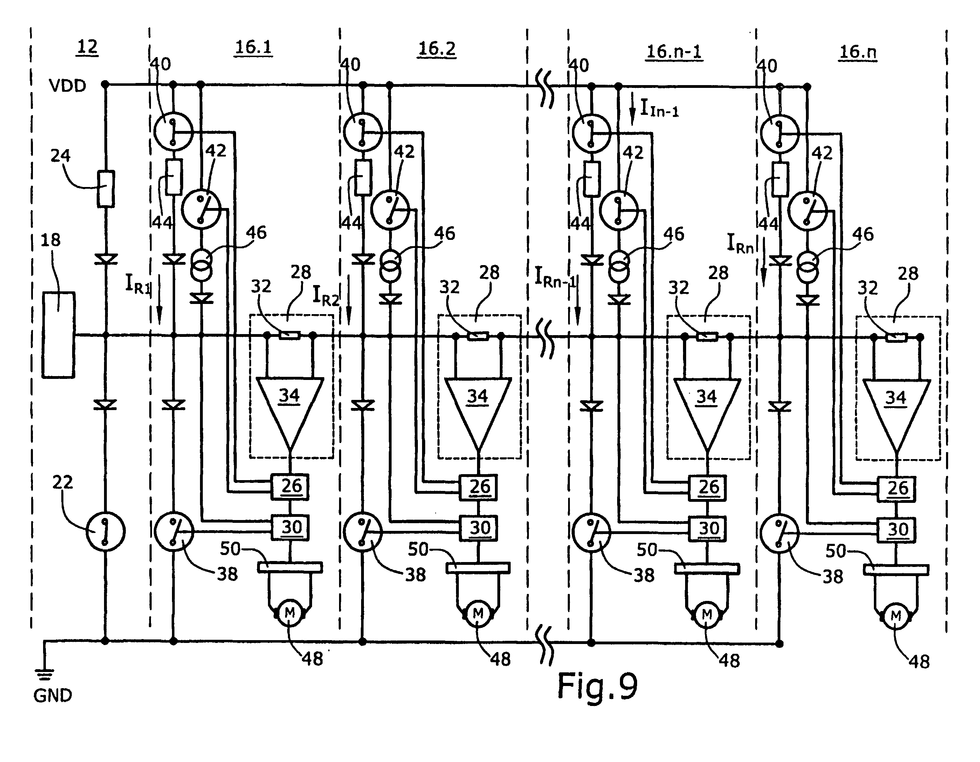

Zu Beginn des nächsten Identifizierzyklus speisen wiederum sämtliche noch nicht adressierten Teilnehmer 16.1 bis 16.n-1 ihre Ruheströme ein (Fig. 9). Es sei angenommen, dass auch während dieser Phase der Adressierung der Teilnehmer 16.2 einen über einem Schwellwert liegenden Strom detektiert, so dass, wie bereits im Zusammenhang mit dem ersten Adressierzyklus beschrieben, die Teilnehmer 16.2 und 16.1 am weiteren Adressierverfahren innerhalb des zweiten Adressierzyklus nicht teilnehmen. Die Identifikation und Adressierung während dieses zweiten Zyklus erfolgt dann in der oben beschriebenen Weise und führt zur Identifikation bzw. Adressierung des Teilnehmers 16.n-1.

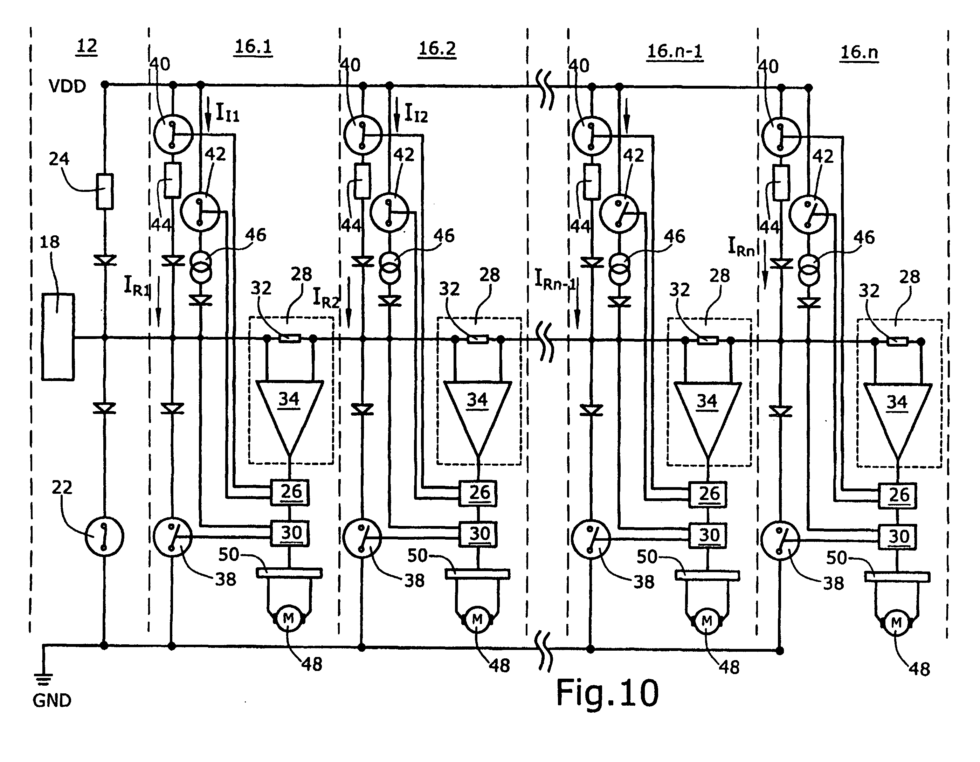

Das zuvor beschriebene Verfahren wird weiter durchgeführt, bis sich eine Situation einstellt, in der der Teilnehmer 16.2 nicht mehr bei der Ruhestromeinspeisung einen Stromwert ermittelt, der über dem Schwellwert liegt. Wenn dies zum ersten Mal während der Adressierung der Fall ist, wird anstelle des Teilnehmers 16.2 der Teilnehmer 16.1 einen immer noch über dem Schwellwert liegenden Strom bei Ruhestromeinspeisung sämtlicher Teilnehmer detektieren. Der Teilnehmer 16.2 ist dann wie die bei Betrachtung des Bus 14 von der Steuereinheit 12 hinter dem Teilnehmer 16 an den Bus 14 angeschlossenen Teilnehmer an dem Identifizier- und Adressierzyklus beteiligt (siehe Fig. 10). Dafür ist dann der Teilnehmer 16.1 an diesen Verfahrensschritten nicht beteiligt.

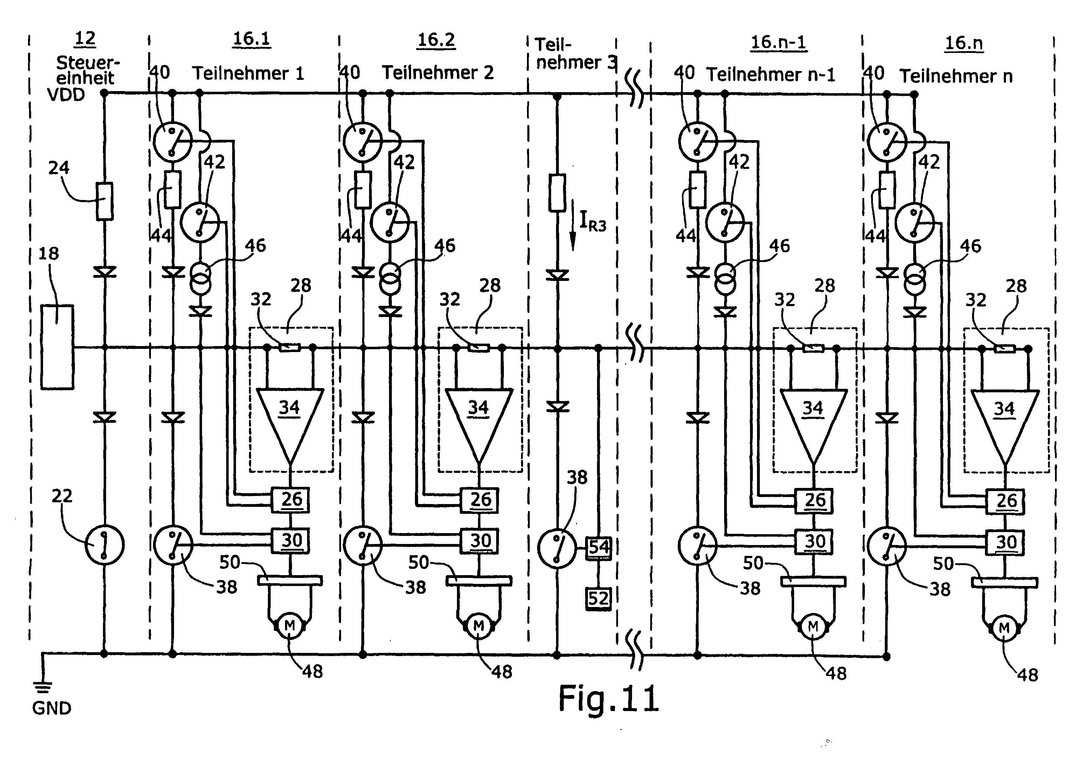

Anhand der Fign. 11 bis 17 wird nachfolgend ein drittes Ausführungsbeispiel eines Busadressierverfahrens beschrieben, das auf einen Bus angewendet wird, der neben den adressierbaren Teilnehmern, wie sie im Zusammenhang mit den Bussystemen 10 der Fign. 1 bis 10 beschrieben sind, auch nicht mit dem erfindungsgemäßen Verfahren adressierbare Standard-Teilnehmer beinhaltet, von denen einer als Teilnehmer 16.3 in den Fign. 11 bis 17 dargestellt ist. Jeder Standard-Teilnehmer speist dauerhaft einen Ruhestrom in den Bus 14 ein. An einem solchen Standard-Teilnehmer ist beispielsweise ein Sensor 52 angeschlossen, der mit der Steuerung 54 des Standard-Teilnehmers verbunden ist.

Der Vorteil der Erfindung besteht darin, dass das Adressierverfahren auch für Bussysteme mit "gemischten" Teilnehmern anwendbar ist, was aus der nachfolgenden Beschreibung deutlich wird. Zunächst wird gemäß Fig. 11 die Grundlast auf dem Bus 14 detektiert, die dadurch entsteht, dass die Standard-Teilnehmer ihre Ruheströme (in Fig. 11 ist lediglich der Standard-Teilnehmer 16.3 dargestellt, dessen Ruhestrom I_{R3} ist) einspeisen. Die Detektoren 28 der adressierbaren Teilnehmer (die Standard-Teilnehmer weisen einen derartigen Detektor 28 nicht auf) detektieren dann Stromwerte, die in der Adressierlogik 26 dieser adressierbaren Teilnehmer abgelegt werden.

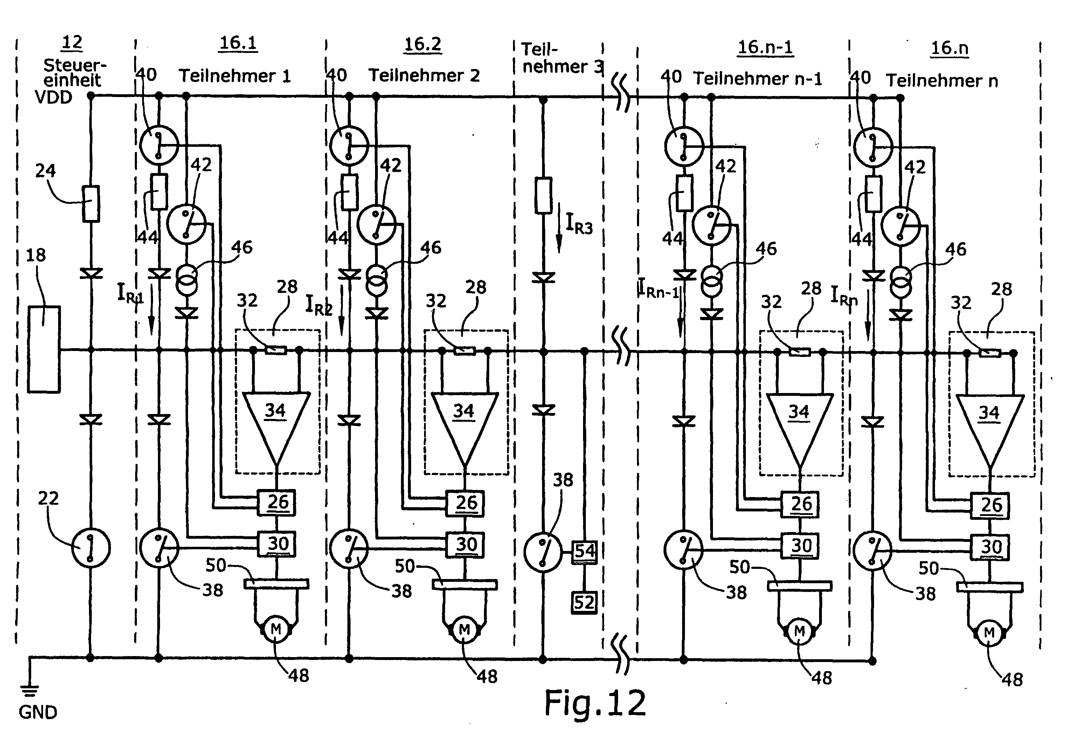

Anschließend (Fig. 12) speisen die adressierbaren Teilnehmer (16.1, 16.2, 16.n-1 und 16.n sind in Fig. 12 eingezeichnet) ihre Ruheströme ein. Nun erfolgt eine Überprüfung zur Verhinderung einer Überlastung des Bus 14 (strommäßig), wenn im folgenden Schritt noch Identifizierströme von sämtlichen adressierbaren Teilnehmern eingespeist würden. In dem hier beschriebenen Fall wird angenommen, dass der adressierbare Teilnehmer 16.2 bei Einspeisung von Ruheströmen durch sämtliche adressierbaren und nicht adressierbaren Teilnehmer einen Strom detektiert, der oberhalb eines vorgegebenen Schwellwerts liegt. Ferner soll ein hinter dem Teilnehmer 16.2 angeordneter adressierbarer Teilnehmer derjenige adressierbare Teilnehmer sein, der bei Betrachtung des Bus 14 von der Steuereinheit 12 am weitesten von dieser entfernt am Bus 14 angeschlossen ist und ebenfalls einen Ruhestrom detektiert, der über dem Schwellwert liegt. Entsprechend der obigen Verfahrensbeschreibung (siehe Fign. 7 bis 10) nehmen also die adressierbaren Teilnehmer 16.1 und 16.2 zunächst nicht am weiteren Adressierverfahren teil.

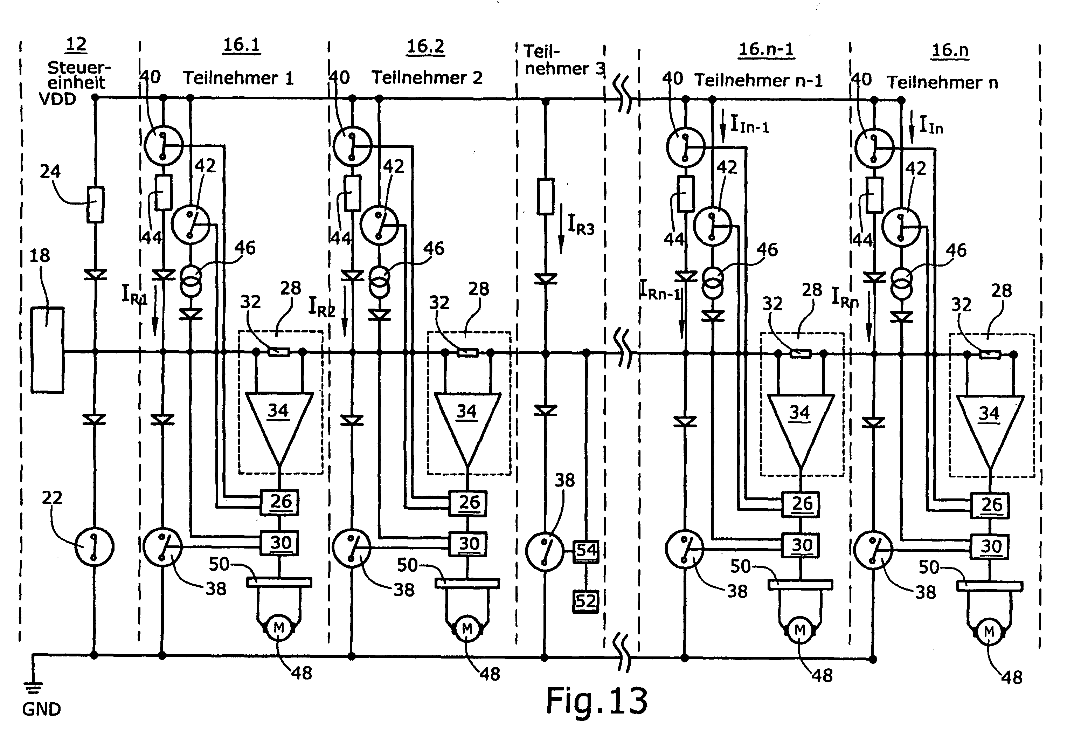

Anschließend (siehe Fig. 13) speisen die hinter dem Teilnehmer 16.2 an den Bus angeschlossenen adressierbaren Teilnehmer ihre Adressierströme ein. Entsprechend der Beschreibung im Zusammenhang mit den Fign.1 bis 6 wird dann der Teilnehmer 16.n als adressierbarer Teilnehmer identifiziert und anschließend auch adressiert. Dieser Teilnehmer nimmt dann in den folgenden Adressierzyklen nicht mehr teil.

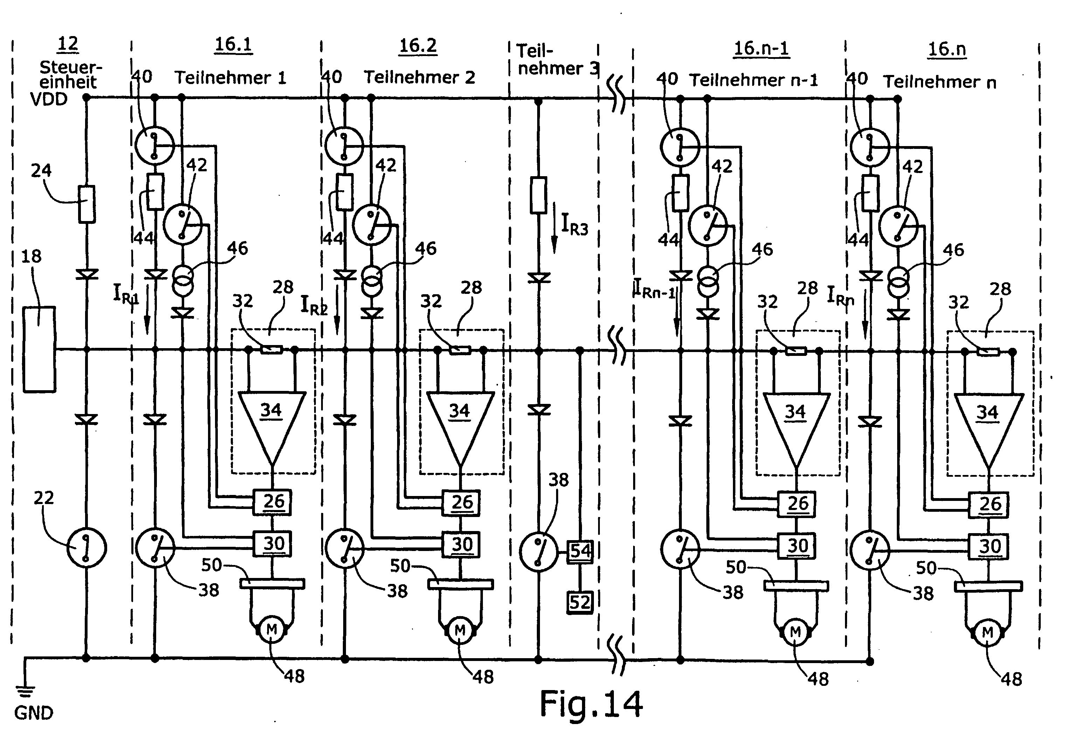

Im nächsten Adressierzyklus (siehe Fig. 14) sei wiederum angenommen, dass der Teilnehmer 16.2 immer noch einen Ruhestrom detektiert, der oberhalb des Schwellwerts liegt. Damit nehmen an diesem Adressierzyklus weiterhin die Teilnehmer 16.1 und 16.2 nicht mehr teil.

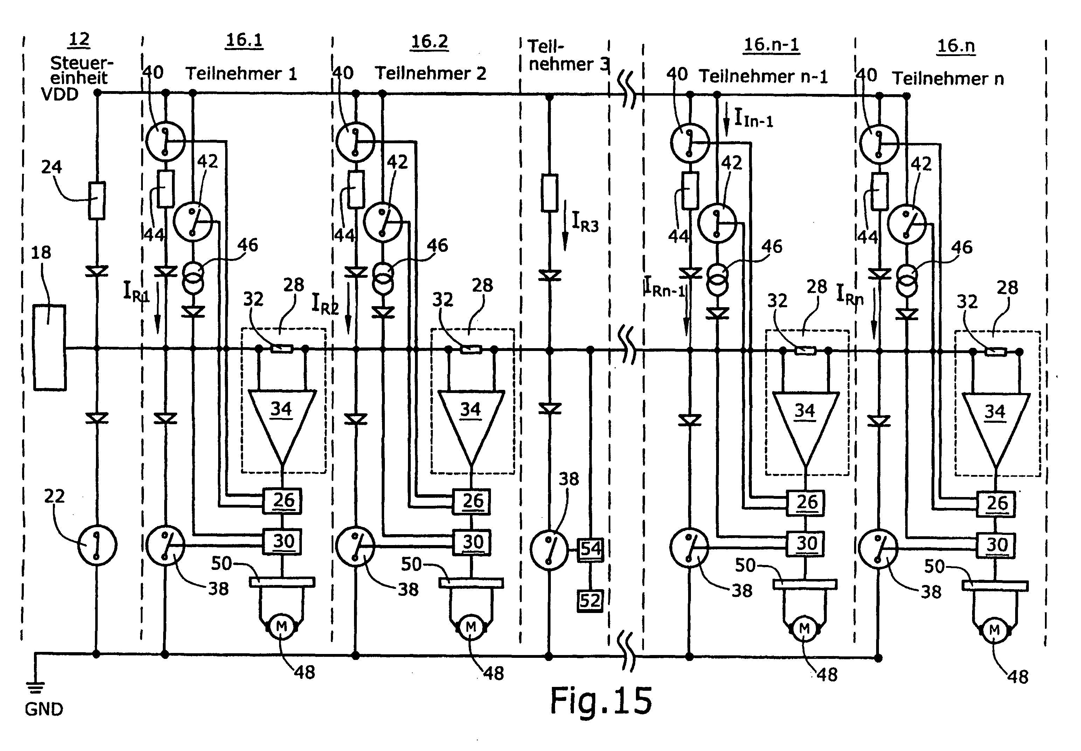

Auf die zuvor beschriebene Weise lässt sich dann in diesem zweiten Adressierzyklus der Teilnehmer 16.n-1 identifizieren und auch adressieren (siehe Fig. 15).

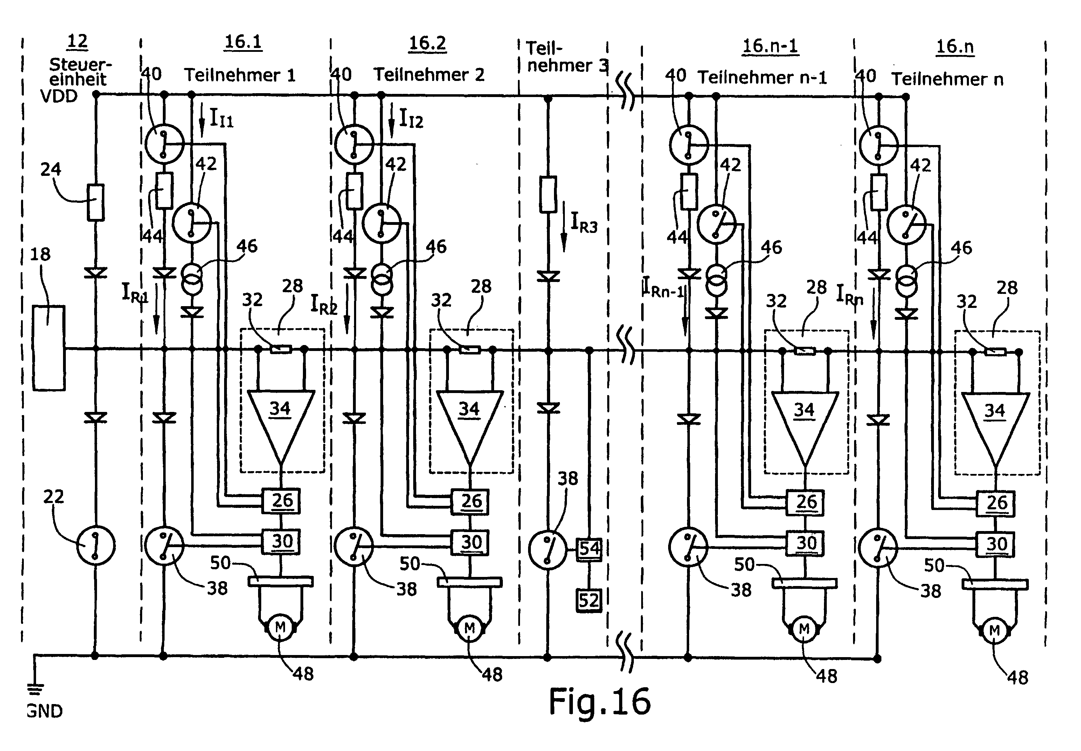

Im Laufe des weiteren Adressierverfahrens kommt es dann zu einer Situation gemäß Fig. 16. In dieser Situation sei angenommen, dass keiner der noch adressierbaren Teilnehmer während der Ruhestromeinspeisung sämtlicher noch nicht adressierter und nicht adressierbarer Teilnehmer einen Strom oberhalb des Schwellwerts detektiert. Damit nehmen die Teilnehmer 16.1 und 16.2 am Identifizier- und Adressierverfahren teil und speisen ihre Identifizierströme in den Bus 14 ein.

Es sei ferner angenommen, dass der Teilnehmer 16.2 zu diesem Zeitpunkt derjenige noch nicht adressierbare Teilnehmer ist, der am weitesten von der Steuereinheit 12 entfernt an den Bus 14 angeschlossen ist. Damit wird dieser Teilnehmer 16.2 in diesem Zyklus identifiziert, da nämlich sein Detektor 28 bei Einspeisung des Ruhestroms I_{I2} einen Strom detektiert, der gleich dem Ruhestrom ist, den dieser Detektor 28 detektiert hat, als zu Beginn des Adressierverfahrens sämtliche nicht adressierbaren Teilnehmer ihre Ruheströme eingespeist hatten.

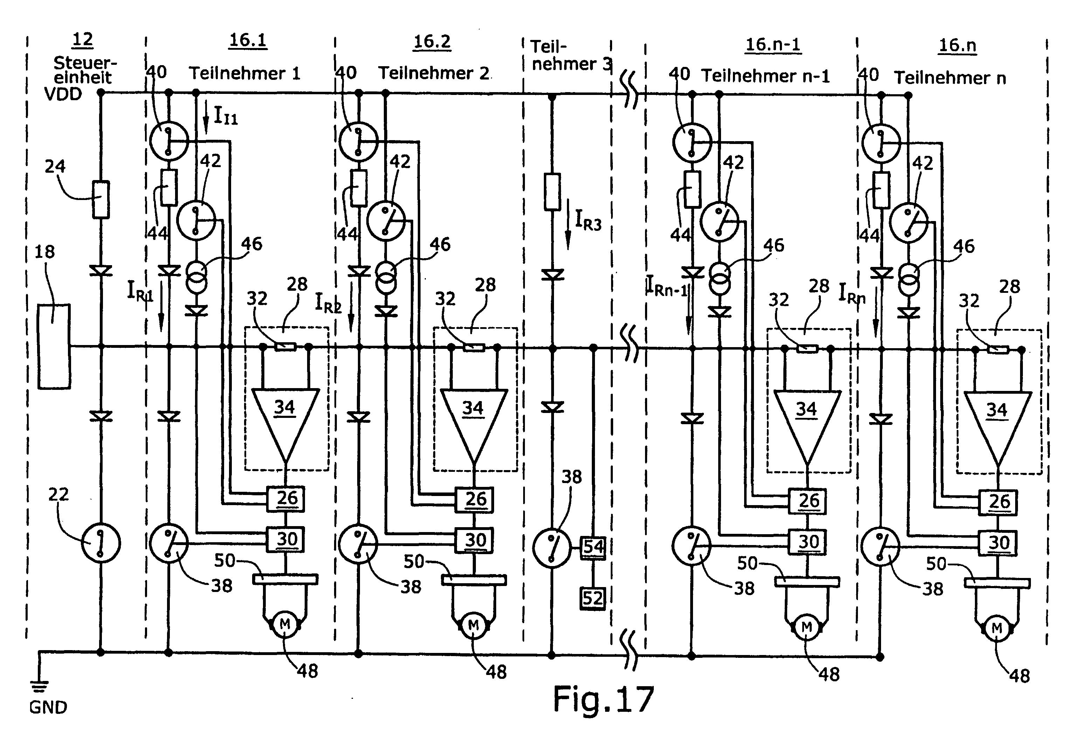

In einem weiteren Adressierschritt (siehe Fig. 17) wird dann der Teilnehmer 16.1 identifiziert und adressiert.

Ganz grundsätzlich gilt für das erfindungsgemäße Verfahren, dass in vorteilhafter Weise Chargenstreuungen, unterschiedliche Technologien/Hersteller/Aufbau der elektronischen Auswertung, Temperatureinflüsse, Pegelverschiebungen bei Bus, VDD und GND im wesentlichen keinen bzw. lediglich einen geringen Einfluss mehr haben. Fremde Teilnehmer, d.h. Teilnehmer, die mangels Implementierung des erfindungsgemäßen Verfahrens nicht an dem Adressierverfahren teilnehmen können, können an beliebiger Stelle an den Bus angeschlossen sein, ohne dass das Adressierverfahren gestört wird.

## Patentansprüche

1. Verfahren zum Adressieren der Teilnehmer eines Bussystems mit einer Steuereinheit, einem von der Steuereinheit ausgehenden Bus und mit mehreren adressierbaren Teilnehmern, die an dem Bus angeschlossen sind, wobei bei dem Verfahren
- jeder noch nicht adressierte Teilnehmer zum Identifizieren einen Identifizierstrom in den Bus einspeist, wobei sämtliche Identifizierströme durch den Bus in Richtung auf die Steuereinheit fließen,
- jeder noch nicht adressierte Teilnehmer den durch den Bus fließenden Strom detektiert und das Verfahren **dadurch gekennzeichnet ist, dass**
- lediglich derjenige noch nicht adressierte Teilnehmer, der keinen Strom oder lediglich einen Strom detektiert, der kleiner als ein vorgebbarer erster Schwellwert ist, als ein noch nicht adressierter Teilnehmer identifiziert wird,
- dem so identifizierten Teilnehmer zwecks Adressierung eine Adresse zugeordnet wird und
- die zuvor genannten Schritte ohne den jeweils zuletzt adressierten Teilnehmer durchgeführt werden, bis sämtliche noch nicht adressierten Teilnehmer adressiert sind.

2. Verfahren nach Anspruch 1, **dadurch gekennzeichnet,**
- **dass** an den Bus neben den adressierten Teilnehmern auch mindestens ein nicht adressierter Teilnehmer angeschlossen ist, der in den Bus einen Ruhestrom einspeist,
- **dass** jeder noch nicht adressierte Teilnehmer vor dem Einspeisen der Identifizierströme den durch den Bus fließenden Ruhestrom detektiert,
- **dass** lediglich die noch nicht adressierten Teilnehmer die Identifizierströme in den Bus einspeisen,
- **dass** lediglich derjenige noch nicht adressierte Teilnehmer, der bei Einspeisung der Identifizierströme durch sämtliche noch nicht adressierten Teilnehmer gegenüber der vorherigen Stromdetektion keine Stromdifferenz oder lediglich eine Stromdifferenz detektiert, die kleiner als ein vorgebbarer zweiter Schwellwert ist, als ein noch nicht adressierter Teilnehmer identifiziert wird,
- **dass** dem so identifizierten Teilnehmer zwecks Adressierung eine Adresse zugeordnet wird und
- **dass** die zuvor genannten Schritte ohne den jeweils zuletzt adressierten Teilnehmer durchgeführt werden, bis sämtliche noch nicht adressierten Teilnehmer adressiert sind.

3. Verfahren nach Anspruch 2, **dadurch gekennzeichnet, dass** der zweite Schwellwert gleich dem ersten Schwellwert ist.

4. Verfahren nach Anspruch 1, **dadurch gekennzeichnet,**
- **dass** jeder adressierbare Teilnehmer in den Bus einen Ruhestrom einspeist,
- **dass** jeder noch nicht adressierte Teilnehmer einen Ruhestrom in den Bus einspeist,
- **dass** jeder noch nicht adressierte Teilnehmer den durch den Bus auf Grund der Ruhestromeinspeisung fließenden Strom detektiert,
- **dass** ermittelt wird, welcher der noch nicht adressierten Teilnehmer einen Strom detektiert, der oberhalb eines vorgebbaren dritten Schwellwerts liegt,
- **dass** lediglich diejenigen noch nicht adressierten Teilnehmer, die bei Einspeisung der Ruheströme einen Strom detektieren, der kleiner als der dritte Schwellwert oder gleich dem dritten Schwellwert ist, Identifizierströme in den Bus einspeisen,
- **dass** aus der Gruppe dieser Identifizierströme einspeisenden, noch nicht adressierten Teilnehmer lediglich derjenige Teilnehmer, der keinen Strom oder lediglich einen Strom detektiert, der kleiner als ein vorgebbarer vierter Schwellwert ist, als ein noch nicht adressierter Teilnehmer identifiziert wird,
- **dass** dem so identifizierten Teilnehmer zwecks Adressierung eine Adresse zugeordnet wird und
- **dass** die zuvor genannten Schritte ohne den jeweils zuletzt adressierten Teilnehmer durchgeführt werden, bis sämtliche noch nicht adressierten Teilnehmer adressiert sind.

5. Verfahren nach Anspruch 4, **dadurch gekennzeichnet, dass** der dritte und/oder vierte Schwellwert gleich dem ersten Schwellwert ist.

6. Verfahren nach Anspruch 1, **dadurch gekennzeichnet,**
- **dass** an den Bus neben den adressierbaren Teilnehmern auch mindestens ein nicht adressierbarer Teilnehmer angeschlossen ist, der in den Bus einen Ruhestrom einspeist,
- **dass** jeder noch nicht adressierte Teilnehmer vor dem Einspeisen der Identifizierströme den in dem Bus auf Grund der Ruhestromeinspeisung sämtlicher nicht adressierbarer Teilnehmer fließenden Strom durch eine erste Stromdetektion ermittelt,
- **dass** anschließend jeder adressierbare Teilnehmer in den Bus einen Ruhestrom einspeist,
- **dass** ermittelt wird, welcher der noch nicht adressierten Teilnehmer einen Strom detektiert, der oberhalb eines vorgebbaren fünften Schwellwerts liegt,
- **dass** lediglich diejenigen noch nicht adressierten Teilnehmer, die bei Einspeisung der Ruheströme einen Strom detektieren, der kleiner als der fünfte Schwellwert oder gleich dem fünften Schwellwert ist, Identifizierströme in den Bus einspeisen,
- **dass** aus der Gruppe dieser Identifizierströme einspeisenden, noch nicht adressierten Teilnehmer lediglich derjenige Teilnehmer, der gegenüber der ersten Stromdetektion keine Stromdifferenz oder lediglich eine Stromdifferenz detektiert, die kleiner als ein vorgebbarer sechster Schwellwert ist, als ein noch nicht adressierter Teilnehmer identifiziert wird,
- **dass** dem so identifizierten Teilnehmer zwecks Adressierung eine Adresse zugeordnet wird und
- **dass** die zuvor genannten Schritte ohne den jeweils zuletzt adressierten Teilnehmer durchgeführt werden, bis sämtliche noch nicht adressierten Teilnehmer adressiert sind.

7. Verfahren nach Anspruch 6, **dadurch gekennzeichnet, dass** der fünfte Schwellwert und/oder sechste Schwellwert gleich dem ersten Schwellwert ist.

8. Verfahren nach einem der Ansprüche 1 bis 7, **dadurch gekennzeichnet, dass** die Stromdetektion in den Teilnehmern über den adressierbaren Teilnehmer zugeordnete Shunt-Widerstände des Bus erfolgt, wobei sämtliche Shunt-Widerstände längs des Bus in Reihe geschaltet sind.

9. Verfahren nach einem der Ansprüche 1 bis 8, **dadurch gekennzeichnet, dass** anstelle einer Stromdetektion eine Spannungsdetektion in den Teilnehmern erfolgt.

10. Verfahren nach einem der Ansprüche 1 bis 9, **dadurch gekennzeichnet, dass** die Zuordnung einer Adresse durch Übermittlung einer Adresse an den identifizierten Teilnehmer oder dadurch erfolgt, dass sämtliche noch nicht adressierten Teilnehmer vor der Identifikation eines Teilnehmers jeweils die gleiche Adresse übermittelt wird und lediglich der anschließend identifizierte Teilnehmer diese Adresse als seine Adresse annimmt.

11. Verfahren nach einem der Ansprüche 1 bis 10, **dadurch gekennzeichnet, dass** die Zuordnung einer Adresse nach der ersten Identifizierung eines Teilnehmers oder nach einer Verifizierung der Identifizierung eines Teilnehmers erfolgt.

12. Verfahren nach Anspruch 11, **dadurch gekennzeichnet, dass** die Verifizierung der Identifikation eines Teilnehmers durch nochmaliges Identifizieren des Teilnehmers und Vergleich der zweiten Identifikation mit der ersten Identifikation erfolgt.

## Claims

1. Method for addressing the participants of a bus system comprising a control unit, a bus starting from the control unit and a plurality of addressable participants connected to the bus, wherein in the method
- each participant not addressed so far feeds an identifying current for identifying purposes into the bus, wherein all identifying currents flow through the bus towards the control unit,
- each participant not addressed so far detects the current flowing through the bus, and the method is **characterized in that**
- only that participant not addressed so far, which does not detect any current or merely detects a current which is smaller than a predeterminable first threshold value, is identified as a participant not addressed so far,
- an address for addressing purposes is assigned to the thus identified participant, and
- the aforementioned steps are carried out, without the respective participant addressed last, until all participants not addressed so far are addressed.

2. Method according to claim 1, **characterized in that**
- the bus has connected thereto, besides the addressable participants, at least one participant not addressable which feeds a quiescent current into the bus,
- each participant not addressed so far detects, prior to feeding the identifying currents, the quiescent current flowing through the bus,
- merely the participants not addressed so far feed the identifying currents into the bus,
- merely that participant not addressed so far is identified as a participant not addressed so far which, while the identifying currents are being fed by all participants not addressed so far, does not detect any current difference or merely detects a current difference which is smaller than a predeterminable second threshold value as compared with its previous detection,
- an address for addressing purposes is assigned to the participant thus identified, and
- the aforementioned steps are carried out, without the respective participant addressed last, until all participants not addressed so far are addressed.

3. Method according to claim 2, **characterized in that** the second threshold value is equal to the first threshold value.

4. Method according to claim 1, **characterized in that**
- each addressable participant feeds a quiescent current into the bus,
- each participant not addressed so far feeds a quiescent current into the bus,
- each participant not addressed so far detects the current fed as quiescent current and flowing through the bus,
- it is determined which of the participants not addressed so far detects a current exceeding a predeterminable third threshold value,
- merely those participants not addressed so far, which, while the quiescent currents are being fed, detect a current smaller than or equal to the third threshold value, feed identifying currents into the bus,
- from the group of these participants not addressed so far and feeding identifying currents only that participant is identified as a participant not addressed so far which does not detect any current or merely detects a current which is smaller than a predeterminable fourth threshold value,
- an address for addressing purposes is assigned to the participant thus identified, and
- the aforementioned steps are carried out, without the respective participant addressed last, until all participants not addressed so far are addressed.

5. Method according to claim 4, **characterized in that** the third and/or fourth threshold value are equal to the first threshold value.

6. Method according to claim 1, **characterized in that**
- the bus has connected thereto, besides the addressable participants, at least one participant not addressable which feeds a quiescent current into the bus,
- each participant not addressed so far detects, prior to feeding of the identifying currents, in a first current detection the current fed as quiescent current by all non-addressable participants and flowing through the bus,
- subsequently each addressable participant feeds a quiescent current into the bus,
- it is determined which of the participants not addressed so far detects a current exceeding a predeterminable fifth threshold value,
- merely those participants not addressed so far, which, while the quiescent currents are fed, detect a current smaller than or equal to the fifth threshold value, feed identifying currents into the bus,
- from the group of these participants not addressed so far and feeding identifying currents merely that participant is identified as a participant not addressed so far which does not detect any current difference or merely detects a current difference which is smaller than a predeterminable sixth threshold value as compared with the first detection,
- an address for addressing purposes is assigned to the participant thus identified, and
- the aforementioned steps are carried out, without the respective participant addressed last, until all participants not addressed so far are addressed.

7. Method according to claim 6, **characterized in that** the fifth threshold value and/or the sixth threshold value are equal to the first threshold value.

8. Method according to one of claims 1 to 7, **characterized in that** the current detection in the participants is effected via shunt resistors of the bus assigned to the addressable participants, wherein all shunt resistors are connected in series along the bus.

9. Method according to one of claims 1 to 8, **characterized in that** instead of a current detection a voltage detection is carried out in the participants.

10. Method according to one of claims 1 to 9, **characterized in that** the assignment of an address is effected by transmitting an address to the identified participant or **in that** the same address is transmitted to all participants not addressed so far prior to identification of a participant, and merely the subsequently identified participant accepts this address as its own address.

11. Method according to one of claims 1 to 10, **characterized in that** the assignment of an address is effected after the first identification of a participant or after verification of the identification of a participant.

12. Method according to claim 11, **characterized in that** the verification of an identification of a participant is effected by another identification of the participant and comparison of the second identification with the first identification.

## Revendications

1. Procédé d'adressage des utilisateurs d'un système de bus avec une unité de commande, un bus partant de l'unité de commande et plusieurs utilisateurs adressables connectés au bus, dans lequel procédé
- chaque utilisateur pas encore adressé injecte pour l'identification un courant d'identification dans le bus, tous les courants d'identification traversant le bus en direction de l'unité de commande,
- chaque utilisateur pas encore adressé détecte le courant traversant le bus,
**caractérisé en ce que**
- seul celui des utilisateurs pas encore adressés qui ne détecte pas de courant ou qu'un courant inférieur à une première valeur seuil prédéterminée est identifié comme utilisateur pas encore adressé,
- une adresse est affectée pour adressage à l'utilisateur ainsi identifié,
- les étapes précitées sont exécutées sans l'utilisateur respectivement le dernier adressé jusqu'à l'adressage de tous les utilisateurs pas encore adressés.

2. Procédé selon la revendication 1, **caractérise en ce que**
- outre les utilisateurs adressés au moins un utilisateur non adressé est connecté au bus, qui injecte un courant de repos dans le bus,
- chaque utilisateur pas encore adressé détecte le courant de repos traversant le bus avant l'injection des courants d'identification,
- seuls les utilisateurs pas encore adressés injectent les courants d'identification dans le bus,
- seul celui des utilisateurs pas encore adressés qui lors de l'injection des courants d'identification par tous les utilisateurs pas encore adressés ne détecte pas de différence de courant par rapport à la détection de courant précédente ou ne détecte qu'une différence de courant inférieure à une deuxième valeur seuil prédéterminée est identifié en tant que tel,
- une adresse pour adressage est affectée à l'utilisateur ainsi identifié, et
- les étapes précitées sont exécutées sans l'utilisateur respectivement le dernier adressé jusqu'à l'adressage de tous les utilisateurs pas encore adressés.

3. Procédé selon la revendication 2, **caractérisé en ce que** la deuxième valeur seuil est égale à la première valeur seuil.

4. Procédé selon la revendication 1, **caractérisé en ce que**
- chaque utilisateur adressable injecte un courant de repos dans le bus,
- chaque utilisateur pas encore adressé injecte un courant de repos dans le bus,
- chaque utilisateur pas encore adressé détecte le courant traversant le bus suite à l'injection du courant de repos,
- l'on détermine celui des utilisateurs pas encore adressés qui détecte un courant supérieur à une troisième valeur seuil prédéterminée,
- seuls ceux des utilisateurs pas encore adressés qui lors de l'injection des courants de repos détectent un courant inférieur ou égal à la troisième valeur seuil injectent des courants d'identification dans le bus,
- du groupe des utilisateurs pas encore adressés injectant ces courants d'identification, seul celui qui ne détecte pas de courant ou ne détecte qu'un courant inférieur à une quatrième valeur seuil prédéterminée est identifié comme utilisateur pas encore adressé,
- une adresse pour adressage est affectée à l'utilisateur ainsi identifié, et
- les étapes précitées sont exécutées sans l'utilisateur respectivement le dernier adressé jusqu'à l'adressage de tous les utilisateurs pas encore adressés.

5. Procédé selon la revendication 4, **caractérisé en ce que** la troisième et/ou quatrième valeur seuil est égale à la première valeur seuil.

6. Procédé selon la revendication 1, **caractérisé en ce que**
- outre les utilisateurs adressables au moins un utilisateur non adressable qui injecte un courant de repos dans le bus est connecté au bus,
- chaque utilisateur pas encore adressé, avant l'injection des courants d'identification, détermine par une première détection de courant le courant traversant le bus suite à l'injection de courant de repos par tous les utilisateurs non adressables,
- chaque utilisateur adressable injecte ensuite dans le bus un courant de repos,
- l'on détermine lequel des utilisateurs pas encore adressés détecte un courant supérieur à une cinquième valeur seuil prédéterminée,
- seuls ceux des utilisateurs pas encore adressés qui lors de l'injection des courants de repos détectent un courant inférieur ou égal à la cinquième valeur seuil injectent des courants d'identification dans le bus,
- du groupe des utilisateurs pas encore adressés injectant ces courants d'identification seul celui qui ne détecte pas de différence de courant par rapport à la première détection de courant ou ne détecte qu'une différence de courant inférieure à une sixième valeur seuil prédéterminée est identifié comme utilisateur pas encore adressé,
- une adresse pour adressage est affectée à l'utilisateur ainsi identifié, et
- les étapes précitées sont exécutées sans l'utilisateur respectivement le dernier adressé jusqu'à l'adressage de tous les utilisateurs pas encore adressés.

7. Procédé selon la revendication 6, **caractérisé en ce que** la cinquième valeur seuil et/ou la sixième valeur seuil est égale à la première valeur seuil.

8. Procédé selon l'une quelconque des revendications 1 à 7, **caractérisé en ce que** la détection de courant dans les utilisateurs s'effectue par des résistances de pontage associées aux utilisateurs adressables, toutes les résistance de pontage étant disposées en série le long du bus.

9. Procédé selon l'une quelconque des revendications 1 à 8, **caractérisé en ce qu'**au lieu d'une détection de courant une détection de tension s'effectue dans les utilisateurs.

10. Procédé selon l'une quelconque des revendications 1 à 9, **caractérisé en ce que** l'affectation d'une adresse s'effectue par transmission d'une adresse à l'utilisateur identifié ou **en ce que** tous les utilisateurs pas encore adressés, avant l'identification d'un utilisateur, reçoivent respectivement la même adresse et seul l'utilisateur ensuite identifié adopte cette adresse comme son adresse.

11. Procédé selon l'une quelconque des revendications 1 à 10, **caractérisé en ce que** l'affectation d'une adresse s'effectue après la première identification d'un utilisateur ou après une vérification de l'identification d'un utilisateur.

12. Procédé selon la revendication 11, **caractérisé en ce que** la vérification de l'identification d'un utilisateur s'effectue par une deuxième identification de l'utilisateur et comparaison de celle-ci avec la première identification.
